# EUROPÄISCHE PATENTANMELDUNG

(11) **EP 1 442 981 A2**
(43) Veröffentlichungstag der Anmeldung: **04.08.2004**
(21) Anmeldenummer: 03027658.8
(22) Anmeldetag: 03.12.2003
(51) Int. Cl.: B65B 9/22, B65B 59/00

(54) **Vorrichtung zum Aufnehmen eines Folienschlauches und vertikale Schlauchbeutelmaschine mit einer derartigen Vorrichtung**

(30) Priorität: 28.01.2003 DE 10304913
(71) Anmelder: Rovema Verpackungsmaschinen GmbH, 35463 Fernwald (DE)
(72) Erfinder: Braun, Harald, 35305 Grünberg (DE); Kuss, Gerhard, 35584 Wetzlar (DE); Baur, Walter, Dr., 63584 Gründau (DE)

(57) **Zusammenfassung**

Um bei einer vertikalen Schlauchbeutelmaschine (1) in einfacher Weise einen Formatwechsel ohne den sonst üblichen Füllrohraustausch vornehmen zu können, wird vorgeschlagen, anstatt eines herkömmlichen starren Füllrohres eine Vorrichtung (7) vorzusehen, welche zwei in vertikaler Richtung (17) ausgerichtete Schlauchführungen (19) aufweist. Ein Abstand (a) zwischen den Schlauchführungen (19) kann mittels einer Einrichtung (21) zum Verstellen derart gewählt werden, dass ein Folienschlauch (6) gewünschten Umfanges auf einer äußeren Oberfläche (18) der Vorrichtung (7) entlanggleiten kann.

## Beschreibung

Die Erfindung betrifft den Bereich der Verpackungsmaschinen und bezieht sich zum einen auf eine Vorrichtung zum Aufnehmen eines aus einer Folienbahn erzeugten Folienschlauches, welcher durch die Vorrichtung zu Verpackungszwecken befüllt werden kann, wobei sich die Vorrichtung in vertikaler Richtung im Inneren des Folienschlauches erstreckt, und die äußere Oberfläche der Vorrichtung für ein Entlanggleiten des Folienschlauches ausgelegt ist. Zum anderen bezieht sich die Erfindung auf eine vertikale Schlauchbeutelmaschine mit einer derartigen Vorrichtung. Bei dieser Verpackungsmaschine wird eine Folienbahn mittels eines Abzugs von einer Vorratsrolle abgewickelt und mittels einer Umlenkkante zu einem Folienschlauch umgeformt. Der Folienschlauch ist dabei vertikal ausgerichtet und umschließt die Vorrichtung. Eine Längssiegeleinrichtung ist zum Verschweißen der Ränder der Folienbahn und damit zum Längsverschweißen des Folienschlauches vorgesehen. Eine Quersiegeleinrichtung ist dazu vorgesehen, mit gegeneinander bewegbaren Quersiegelbacken den Folienschlauch quer zu seiner Transportrichtung zu verschweißen. Mittels einer Trenneinrichtung wird ein erzeugter Beutel vom Folienschlauch abgetrennt.

Derartige Vorrichtungen und vertikale Schlauchbeutelmaschinen sind hinlänglich bekannt. Als Vorrichtung dient ein sogenanntes Form- und Füllrohr. Der Folienschlauch läuft über dieses Füllrohr und wird währenddessen längs verschweißt. Jeweils eine Produktportion fällt durch das Füllrohr und gelangt derart in das untere, bereits verschweißte Ende des Folienschlauches, welches nach kopfseitiger Verschweißung und Abtrennung vom Folienschlauch einen befüllten und verschweißten Schlauchbeutel ergibt. Das Füllrohr dient auch einer Vorgabe einer zu erzielenden Beutelform. So bestimmt der Umfang eines bekannten, zylinderförmigen Füllrohres den Umfang der erzeugten Beutel.

Die bekannten Vorrichtungen haben den Nachteil, dass sie für einen Formatwechsel ausgetauscht werden müssen. Soll also nach der Herstellung von Beuteln mit einem bestimmten Umfang eine Serie Beutel anderen Umfangs erzeugt werden, so wird das zuvor benutzte Füllrohr gegen ein neues Füllrohr, welches dem neuen Beutelformat entspricht, ausgetauscht. Dieser Austausch ist nicht nur zeitintensiv. Es müssen Füllrohre unterschiedlichen Umfangs bereitgestellt werden, was somit auch kostenintensiv ist.

Der Erfindung liegt die Aufgabe zugrunde, eine Vorrichtung der eingangs beschriebenen Art dahingehend weiterzuentwickeln, dass bei einem Formatwechsel der Austausch der Vorrichtung vermieden werden kann.

Gelöst ist die Aufgabe dadurch, dass die Vorrichtung zwei separate, parallel zueinander und in vertikaler Richtung ausgerichtete Schlauchführungen aufweist, wobei die Schlauchführungen einen Befüllquerschnitt des Folienschlauches begrenzen, und an der Vorrichtung eine Einrichtung zum Verstellen des Abstandes zwischen den Schlauchführungen vorgesehen ist, um damit den Befüllquerschnitt zu verändern (Anspruch 1). Die erfindungsgemäße vertikale Schlauchbeutelmaschine (Anspruch 9) weist eine derartige Vorrichtung auf.

Die Erfindung hat den Vorteil, dass die Vorrichtung bei einem Formatwechsel nicht ausgetauscht werden muss. Die Vorrichtung wird derart auf ein neues Beutelformat eingestellt, als der Abstand der Schlauchführungen entsprechend verstellt wird. Dadurch wird ein neuer Befüllquerschnitt vorgegeben. Der entsprechende Umfang der Vorrichtung gibt den Umfang der Beutel vor, die das neue Format aufweisen. Sollen z. B. Beutel kleineren Umfangs hergestellt werden, so wird zunächst eine Folienbahn geringerer Breite eingesetzt. Die Schlauchführungen werden sodann derart auf die neue Folienbahn eingestellt, dass der Abstand zwischen den Schlauchführungen kleiner wird. Der entsprechende Umfang des Folienschlauches ist somit geringer, und die erzeugten Beutel werden schmäler. Das Verstellen des Abstandes erfolgt relativ schnell. Mittels einer einzigen Vorrichtung wird ein Formatbereich abgedeckt. Die früher benötigten Füllrohre mit unterschiedlichen Formaten, die diesen Formatbereich abdeckten können derart ersetzt werden.

Weitere, vorteilhafte Ausgestaltungen der Erfindung sind in den Ansprüchen 2 bis 8 und 10 bis 16 beschrieben.

Sind die Schlauchführungen rinnenförmig ausgestaltet (Anspruch 2), so können diese Rinnen mit ihrer Wölbung nach außen ausgerichtet werden, um eine annähernd rohrförmige Vorrichtung zu erreichen. Hierbei wird ein sehr zuverlässiger Folienlauf erzielt. Als horizontaler Querschnitt einer Schlauchführung eignet sich hierbei ein halbkreisartiger oder ein halbelliptischer Querschnitt (Anspruch 3). Die aufgrund des Abstandes zwischen den Schlauchführungen verursachten beiden vertikalen Lücken auf gegenüberliegenden Seiten der Vorrichtung sind nicht störend für den Folienlauf, da sie vom Folienschlauch überspannt werden. Bezüglich des Querschnittes des Folienschlauches wirken diese Lücken so, wie gerade Schlauchführungselemente dort wirken würden.

Ein abgeflachter Folienschlauch und insofern relativ flache Beutel werden erreicht, wenn analog Anspruch 4 die Schlauchführungen jeweils zwei parallel zueinander verlaufende Wände aufweisen, welche über ein Verbindungsstück miteinander verbunden sind. Dabei wird der Folienlauf günstig beeinflusst, wenn das Verbindungsstück im horizontalen Querschnitt einen nach außen gerichteten Bogen oder eine nach außen weisende Spitze aufweist (Anspruch 5).

Die Einrichtung zum Verstellen stört den Folienlauf über die Vorrichtung nicht, wenn sie gemäß Anspruch 6 im Inneren der Vorrichtung, vorzugsweise an dem Spalt, der den Abstand der Schlauchführungen beschreibt, vorgesehen ist. Die Einrichtung kann relativ beliebig ausgeführt werden. So ist es z. B. möglich, dass die Einrichtung eine Steckverbindung, eine Klemmverbindung (Anspruch 7) oder eine Teleskopverbindung mit einer Teleskoparretierung (Anspruch 8) aufweist.

Ist mit der Umlenkkante der vertikalen Schlauchbeutelmaschine eine tragende Fläche verbunden, wobei diese Fläche zum Tragen der einlaufenden Folienbahn vorgesehen ist, so dass die Folienbahn in stetiger Weise über die Fläche auf die Umlenkkante zu läuft, wobei die Fläche aus zwei Teilflächen besteht, welche mittels einer Verstelleinrichtung aufeinander zu bzw. voneinander weg gestellt werden können, und jede Teilfläche einen Abschnitt oder mehrere Abschnitte der Umlenkkante aufweist (Anspruch 10), so ist eine Formschulter erreicht, die genauso wie die Vorrichtung auf ein anderes Beutelformat eingestellt werden kann. In analoger Weise zur Einrichtung zum Verstellen der Vorrichtung kann die Verstelleinrichtung auf eine andere Folienbahnbreite eingestellt werden. Die fehlende tragende Fläche zwischen den Teilflächen wird von der einlaufenden Folienbahn überspannt.

Ist die Einrichtung im Bereich der Umlenkkante angeordnet (Anspruch 11), so ist in einfacher Weise eine Verstellung von außen her möglich. Eine vorne, d. h. zur Längssiegeleinrichtung hin offene Formschulter, welche die Umlenkkante aufweist, eignet sich besonders zur Aufnahme der Schlauchführungen, da hierbei eine Schlauchführung durch die Öffnung nach vorne aus der Formschulter herausragen kann, was insbesondere für ein großes Beutelformat von Vorteil ist.

Ist eine ortsfeste Schlauchführung als Widerstand für den Abzug vorgesehen (Anspruch 12), so kann der Folienschlauch durch ein Andrücken gegen diesen ortfesten Widerstand weitertransportiert werden. Bei einer Formatverstellung ist es folglich nicht notwendig, den Abzug zu verändern. Es wird allein die zweite Schlauchführung verstellt. Analoges gilt für die Längssiegeleinrichtung und eine ortsfeste Schlauchführung direkt an der Längssiegeleinrichtung. Eine durch die Form der ortsfesten Schlauchführung unterstützte Längsnahtausbildung bleibt bei einer Formatverstellung erhalten, wenn lediglich die zweite, etwas von der Längsnaht entfernte Schlauchführung verstellt wird (Anspruch 15). Prinzipiell könnte aber auch die zweite Schlauchführung ortsfest sein, was einen großen Vorteil bezüglich des bekanntlich komplizierten Folieneinlaufs über die Umlenkkante bedeutet, wenn die Umlenkkante mitsamt der an der Umlenkkante angeordneten Schlauchführung ortsfest ist. Für relativ kleine Abstandsveränderungen reicht es gegebenenfalls aus, bei ortsfester Umlenkkante die an der Umlenkkante angeordnete Schlauchführung zu versetzen und mitsamt der ersten Schlauchführung könnte auch die Längssiegeleinrichtung verstellt werden (Anspruch 14), oder beide Schlauchführungen werden verstellt. Zum Verstellen des Abstandes zwischen den Schlauchführungen eignet sich auch ein Motor (Anspruch 13).

Sind zwischen den beiden Schlauchführungen zwei parallel zueinander ausgerichtete Füllrohre vorgesehen (Anspruch 16), so kann zeitgleich oder hintereinander eine Beutelbefüllung durch diese beiden Füllrohre erfolgen. Zum einen kann durch ein Füllrohr eine Grobdosierung und ein Füllrohr geringeren Durchmessers eine Feindosierung erfolgen, um derart eine bessere Dosiergenauigkeit zu erreichen. Oder jeweils ein Füllrohr dient dem Zuführen einer Produktkomponente, um den Beutel mit zwei verschiedenen Komponenten zu befüllen.

Im folgenden wird die Erfindung an Hand von Ausführungsbeispiele darstellenden Figuren näher beschrieben. Es zeigt:

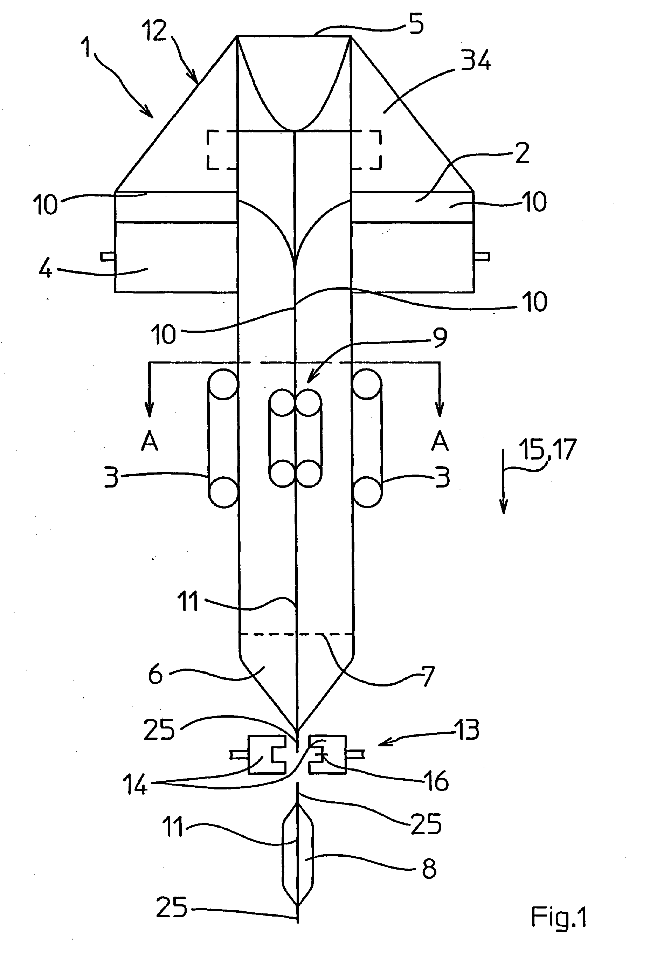

- Figur 1: in einer Seitenansicht eine vertikale Schlauchbeutelmaschine mit einer von einer Vorratsrolle abgewickelten Folienbahn, welche mittels eines Folienabzuges weitertransportiert wird, wobei an einer Umlenkkante einer Formschulter die Folienbahn zu einem Folienschlauch umgeformt wird, welcher ein abgeflachtes, aus zwei rinnenförmigen Schlauchführungen gebildetes Füllrohr umgibt, mit einer Längssiegeleinrichtung und einer Quersiegeleinrichtung zum Verschweißen des Folienschlauches, und mit einer Trenneinrichtung in einer Quersiegelbacke zum Abtrennen eines befüllten und verschweißten abgeflachten Beutels vom Folienschlauch;
- Figur 2: in einer Schnittdarstellung die entlang A-A der Figur 1 geschnittenen, abgeflachten Schlauchführungen der Figur 1, mitsamt dem Folienschlauch, welcher entlang eines Randes verschweißt wird;
- Figur 3: in einer Schnittdarstellung die aus den beiden Schlauchführungen und einer Einrichtung zum Verstellen des Abstandes zwischen den Schlauchführungen gebildete Vorrichtung der Figur 2 in einem Zustand, bei dem eine relativ große Breite c der Vorrichtung eingestellt ist;
- Figur 4: in einer Schnittdarstellung den Gegenstand der Figur 3, jedoch mit einer geringeren Breite c;
- Figur 5: in einer Schnittdarstellung eine Vorrichtung analog Figur 3, jedoch mit einer anderen Ausgestaltung der Folienführungen und mit einem Folienschlauch, der an gegenüberliegenden Rändern verschweißt ist;
- Figur 6: in einer Schnittdarstellung eine aus zwei halbkreisförmigen Folienführungen und einer Einrichtung zum Verstellen gebildete Vorrichtung, wobei die Einrichtung teleskopartig ausgebildet ist;
- Figur 7: in einer Ansicht von oben einen Teil der Einrichtung der Figur 6;
- Figur 8: in einer Ansicht von oben eine verstellbare Formschulter, die für ein Zusammenwirken mit einer Vorrichtung gemäß Figur 3 geeignet ist;
- Figur 9: in einer Seitenansicht eine Formschulter mit eingesetzten Schlauchführungen, wobei die Schlauchführungen ein kleines Beutelformat vorgeben;
- Figur 10: in einer Ansicht von oben den Gegenstand der Figur 9;
- Figur 11: in einer Seitenansicht den Gegenstand der Figur 9, jedoch mit von einander weg gestellten Schlauchführungen, die somit ein größeres Beutelformat vorgeben;
- Figur 12: in einer Ansicht von oben den Gegenstand der Figur 11;
- Figur 13: in einer Schnittdarstellung einen Gegenstand analog Figur 9, jedoch mit einem Motor zum Verstellen des Abstandes zwischen den Schlauchführungen, wobei der Motor zum Parallelversetzen einer Schlauchführung mitsamt der an dieser Schlauchführung vorgesehenen Längssiegeleinrichtung vorgesehen ist, und mit zwei Füllrohren innerhalb der Schlauchführungen, sowie
- Figur 14: in einer Schnittdarstellung den Gegenstand der Figur 13, jedoch mit größerem Abstand zwischen den Schlauchführungen, wobei die gestrichelte Darstellung mögliche Abstände ausdrückt.

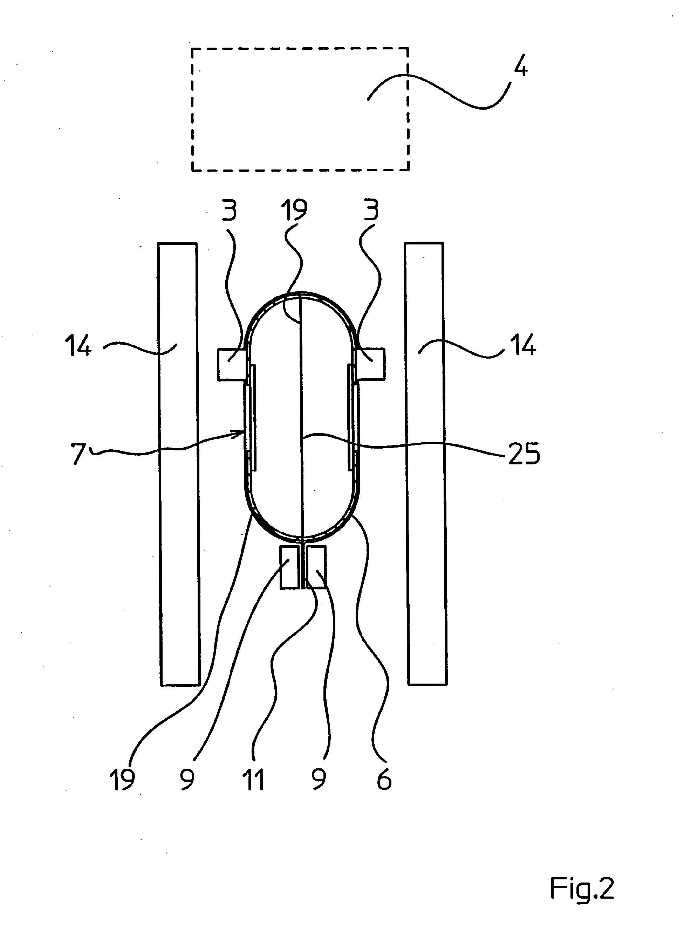

Bei einer vertikalen Schlauchbeutelmaschine 1 (Figur 1) wird eine Folienbahn 2 mittels eines Abzugs 3 von einer Vorratsrolle 4 abgewickelt und mittels einer Umlenkkante 5 einer Formschulter 12 zu einem Folienschlauch 6 umgeformt. Dabei ist der Folienschlauch 6 vertikal ausgerichtet und umschließt eine Vorrichtung 7 entlang welcher der Folienschlauch 6 gleitet, und durch die er befüllt wird. Eine Längssiegeleinrichtung 9 ist zum Verschweißen der Ränder 10 der Folienbahn 2 und damit zum Längsverschweißen des Folienschlauches 6 mittels einer Längsnaht 11 vorgesehen (Figur 2). Eine Quersiegeleinrichtung 13 mit gegeneinander bewegbaren Quersiegelbacken 14 dient zum Verschweißen des Folienschlauches 6 quer zu seiner Transportrichtung 15 mittels Quemähten 25. Eine Trenneinrichtung 16 ist zum Abtrennen eines erzeugten Beutels 8 vom Folienschlauch 6 vorgesehen.

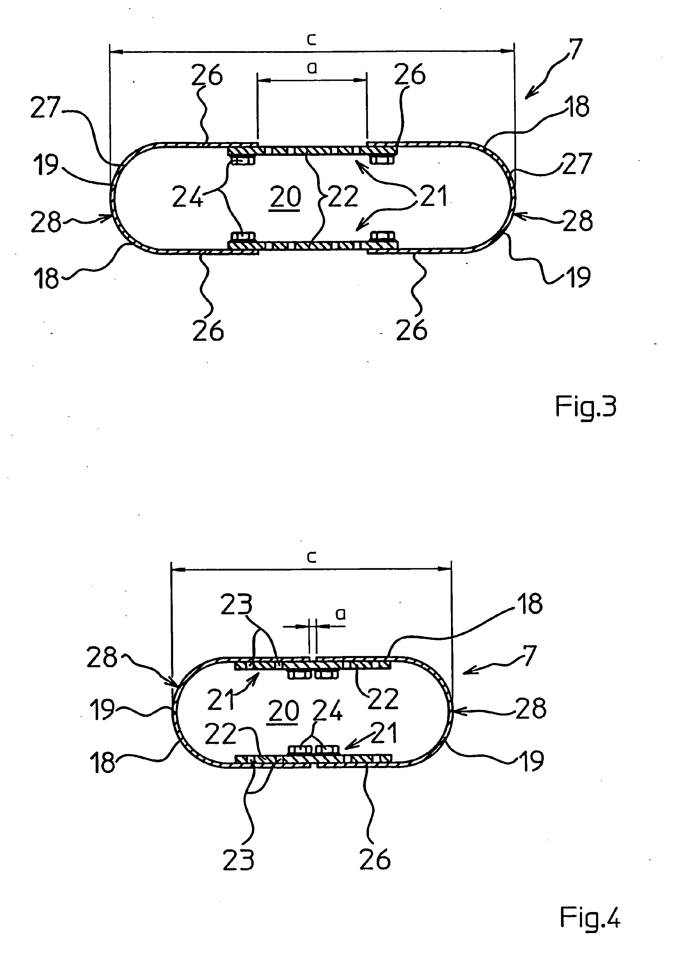

Die Vorrichtung 7 zum Aufnehmen des aus der Folienbahn 2 erzeugten Folienschlauches 6 erstreckt sich in vertikaler Richtung 17 im Inneren des Folienschlauches 6. Die äußere Oberfläche 18 der Vorrichtung 7 ist für ein Entlanggleiten des Folienschlauches 6 ausgelegt. Die Vorrichtung 7 weist zwei separate, parallel zueinander und in vertikaler Richtung 17 ausgerichtete Schlauchführungen 19 auf. Die Schlauchführungen 19 begrenzen einen Befüllquerschnitt 20 des Folienschlauches 6. An der Vorrichtung 7 (Figuren 3 und 4) ist eine Einrichtung 21 zum Verstellen des Abstandes (a) zwischen den Schlauchführungen 19 vorgesehen, um damit den Befüllquerschnitt 20 zu verändern. Die Einrichtung 21 besteht aus zwei Blechen 22, welche Bohrungen 23 aufweisen. Durch jeweils zwei Bohrungen 23 eines Blechs 22 sind zwei Schrauben 24 in die Schlauchführungen 19 geschraubt. Die Auswahl der Bohrungen 23 bestimmt den Abstand a. Jede Schlauchführung 19 weist zwei parallel zueinander verlaufende Wände 26 auf, welche über ein Verbindungsstück 27 miteinander verbunden sind. Das Verbindungsstück 27 weist im horizontalen Querschnitt einen nach außen gerichteten Bogen 28 auf.

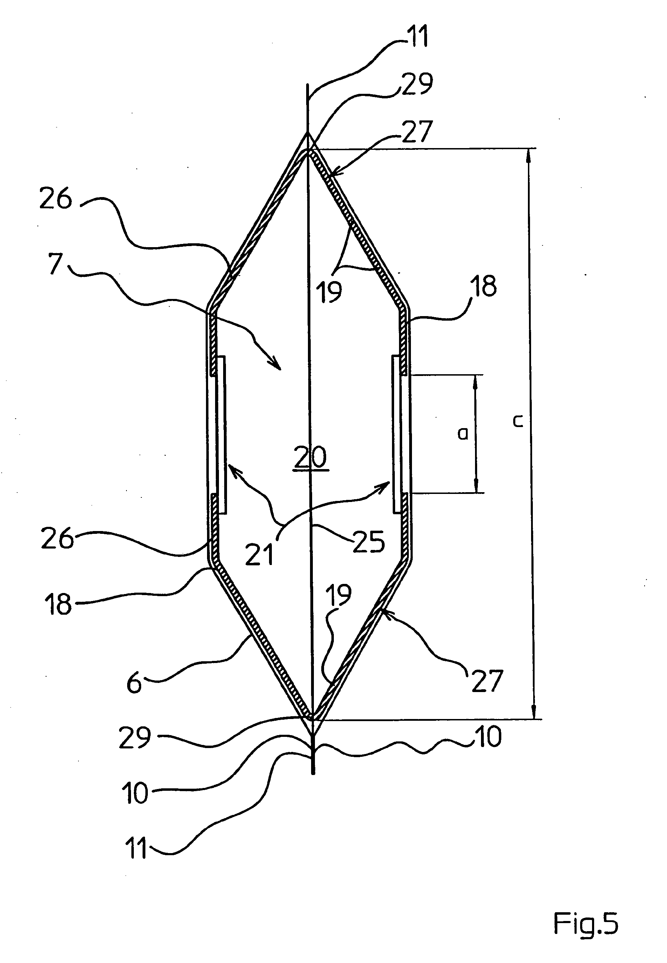

Beim Ausführungsbeispiel der Figur 5 ist dagegen das Verbindungsstück 27 mit einer Spitze 29 versehen. Die beiden Spitzen 29 dienen dazu, den Folienschlauch 6 auf gegenüberliegenden Seiten auszulenken, um insgesamt zwei Längsnähte 11 am Folienschlauch 6 zu erzeugen.

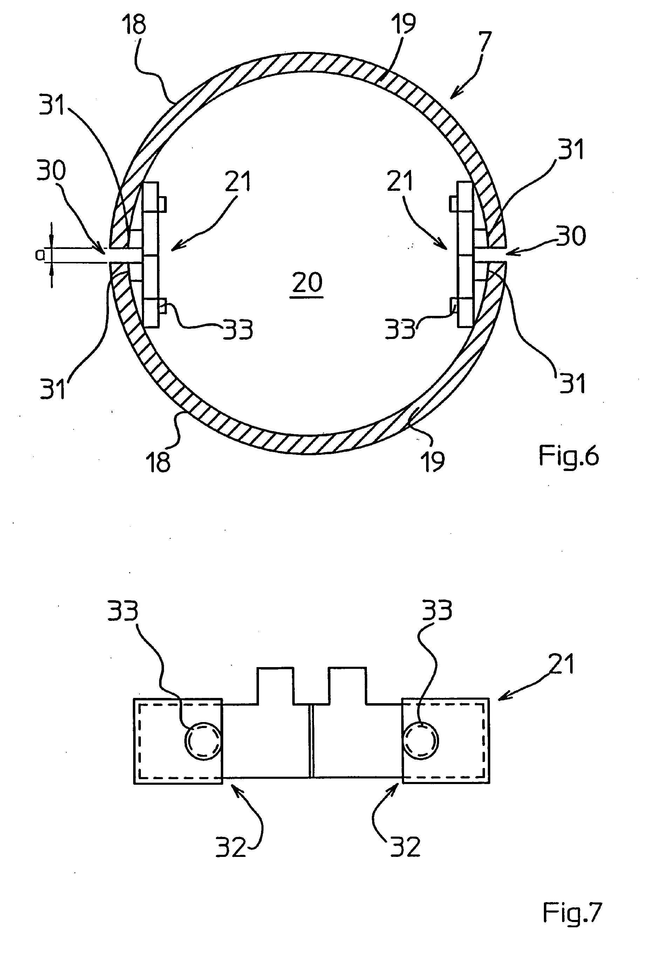

Beim Ausführungsbeispiel der Figuren 6 und 7 ist die Einrichtung 21 genauso wie bei den anderen Ausführungsbeispielen, im Inneren der Vorrichtung 7 vorgesehen und zwar an dem Spalt 30, der den Abstand der Schlauchführungen 19 beschreibt. Die Schlauchführungen 19 sind kreisbogenförmig ausgestaltet. Die Einrichtung 21 ist mittels Schweißverbindungen 31 mit den Schlauchführungen 19 verbunden. Die Einrichtung 21 weist eine Teleskopverbindung 32 auf, welche in einem gewünschten Zustand mittels einer Teleskoparretierung 33 (Feststellschraube) festgestellt werden kann.

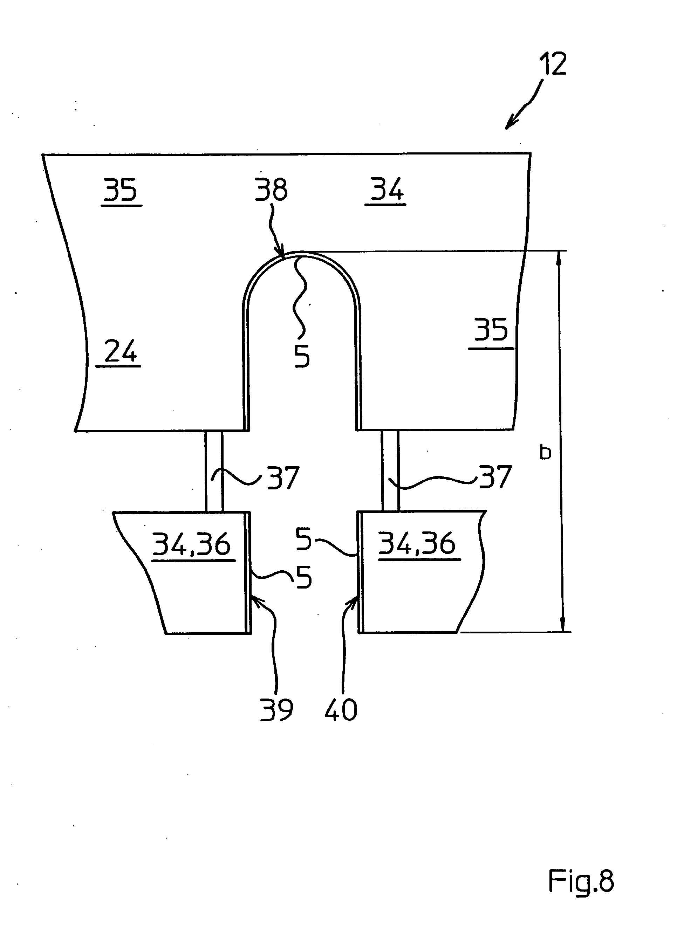

Als Formschulter 12 für eine vertikale Schlaubeutelmaschine 1 gemäß Figur 1 würde sich auch eine Formschulter 12 gemäß Figur 8 eignen. Bei dieser Formschulter 12 ist mit der Umlenkkante 5 eine tragende Fläche 34 verbunden. Diese Fläche 34 ist zum Tragen der einlaufenden Folienbahn 2 vorgesehen, so dass die Folienbahn 2 in stetiger Weise über die Fläche 34 auf die Umlenkkante 5 zu läuft. Die Fläche 34 besteht aus zwei Teilflächen (35, 36) welche mittels einer Verstelleinrichtung 37 aufeinander zu bzw. voneinander weg gestellt werden können. Dabei besteht die Teilfläche 36 aus zwei Teilen. Jede Teilfläche 35, 36 weist einen Abschnitt 38 bzw. zwei Abschnitte 39, 40 der Umlenkkante 5 auf. Die Verstelleinrichtung 37 ist dazu vorgesehen, eine bestimmte Erstreckung b der Umlenkkante 5 einzustellen. Die Erstreckung b korrespondiert mit einer bestimmten Breite c der Vorrichtung 7 (Figur 3).

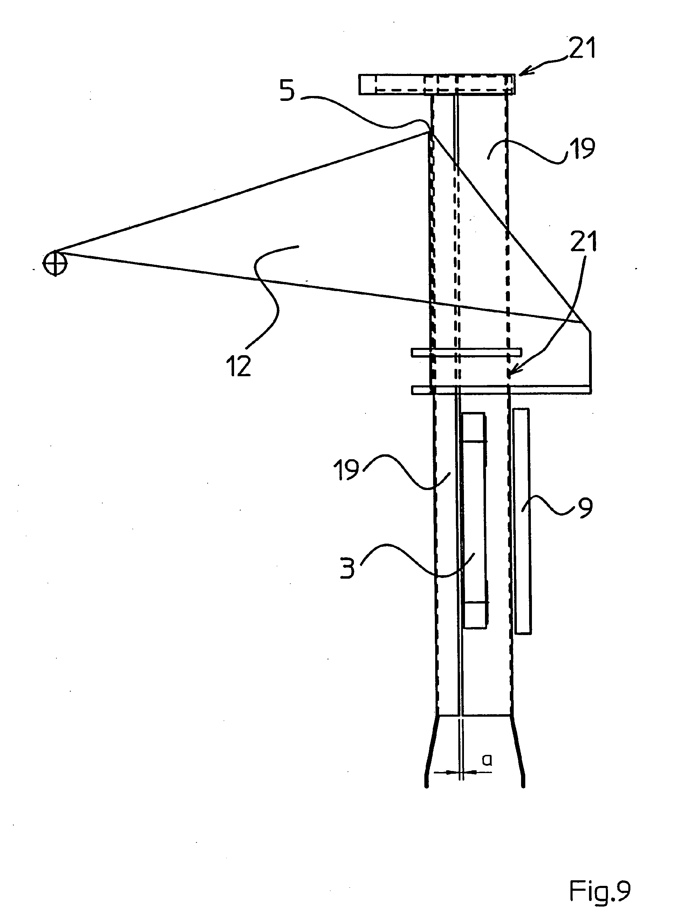

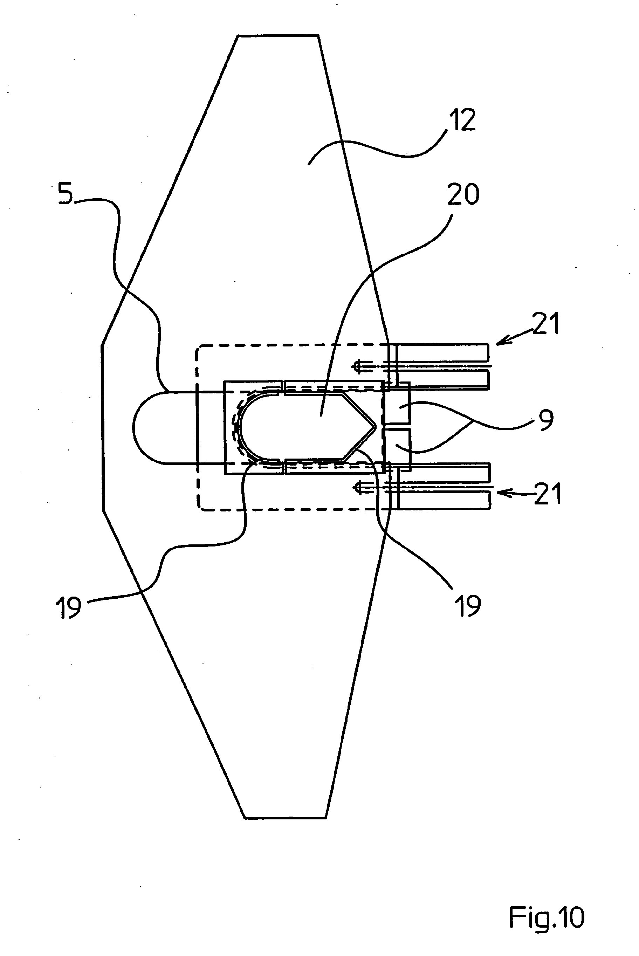

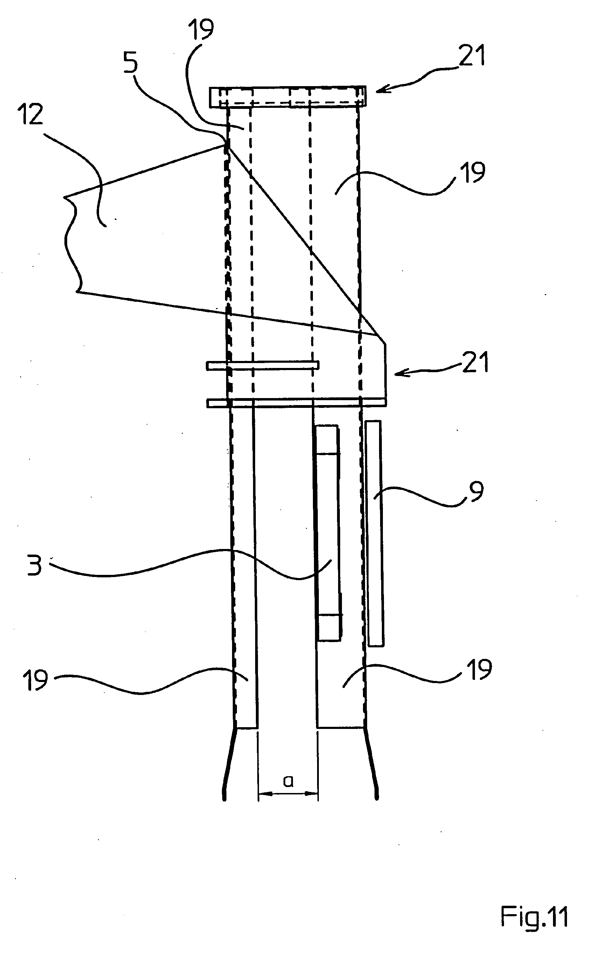

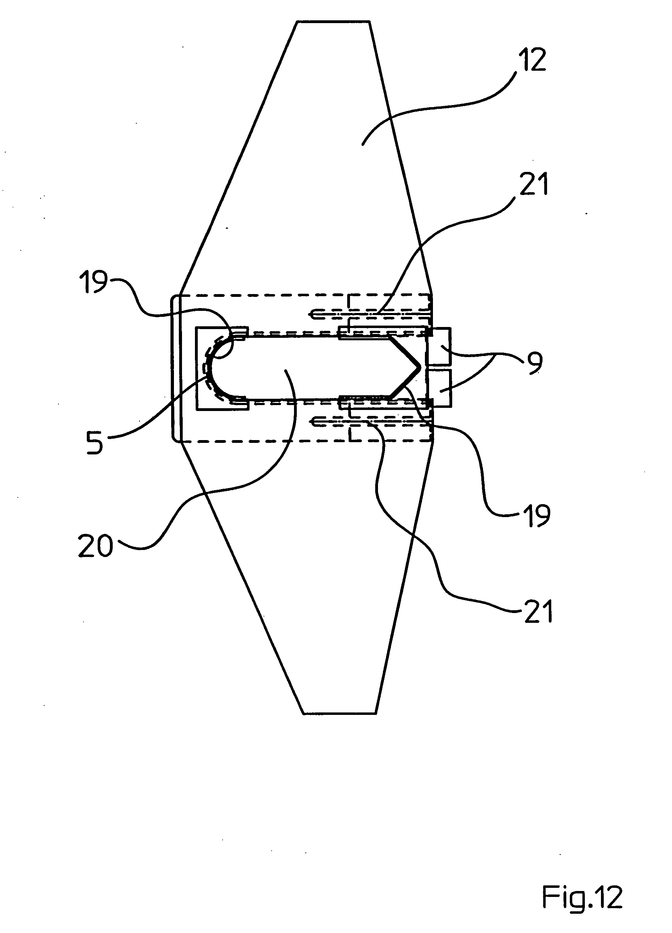

Beim Ausführungsbeispiel der Figuren 9 bis 12 ist die Einrichtung 21 zum Verstellen zum Teil im Bereich der Umlenkkante 5 einer Formschulter 12 angeordnet. Innerhalb dieser Einrichtung 21 ist die rechte Schlauchführung 19 ortsfest montiert (Figuren 9 und 10). Die linke Schlauchführung 19 kann nach links gesetzt und dort innerhalb der Einrichtung 21 arretiert werden (Figuren 11 und 12). Durch dieses Versetzen werden der Befüllquerschnitt 20 für einen Folienschlauch und der Abstand a zwischen den Schlauchführungen 19 vergrößert (Figur 12). Im Gegensatz dazu ist die rechte Schlauchführung 19 ortfest und könnte nur mitsamt dem Abzug 3 und der Längssiegeleinrichtung 9 versetzt werden.

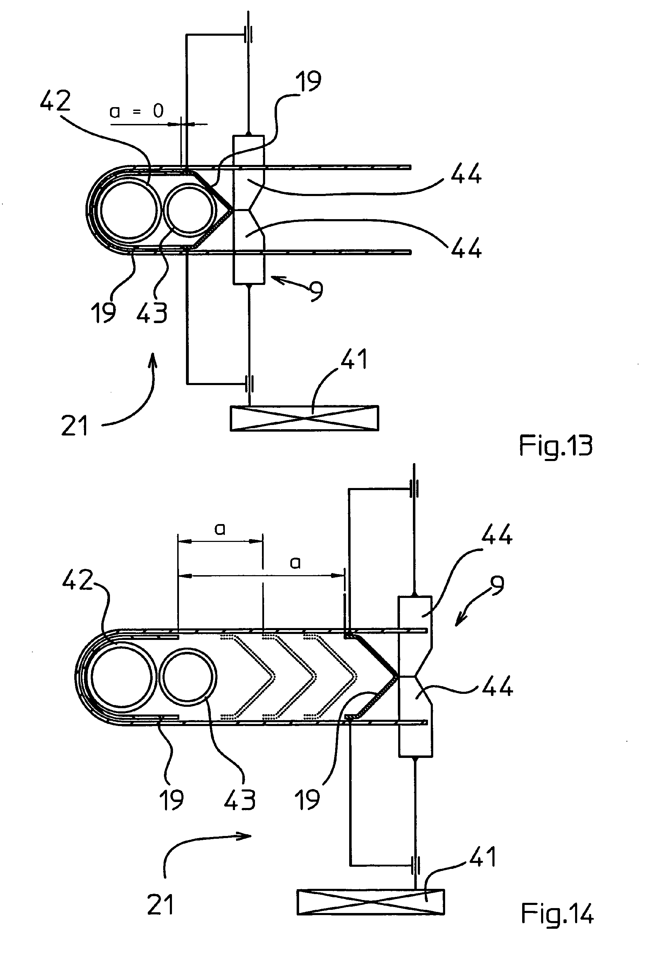

Beim Ausführungsbeispiel der Figuren 13 und 14 weist die Einrichtung 21 einen Motor 41 zum Verstellen des Abstandes a zwischen den Schlauchführungen 19 auf. Die Einrichtung 21 ist zum Parallelversetzen einer Schlauchführung 19 mitsamt der an dieser Schlauchführung 19 vorgesehenen Längssiegeleinrichtung 9 ausgelegt. Die Längssiegeleinrichtung 9 hat zwei gegeneinander bewegliche Längssiegelbacken 44, die bei dem dargestellten Druckkontakt mit ihren Siegelflächen die Ränder der Folienbahn verschweißen können. Zwischen den beiden Schlauchführungen 19 sind zwei parallel zueinander ausgerichtete Füllrohre 42, 43 vorgesehen. Mit der Vorrichtung können Beutel geringer Breite (Figur 13) und, nach einer motorischen Verstellung (Figur 14) Beutel größerer Breite erzeugt werden. Während durch das eine Füllrohr 42 eine Grobdosierung mittels Förderschnecke erfolgt, ist dies durch das Füllrohr 43 bezüglich einer anschließenden Feindosierung der Fall.
- a: Abstand
- b: Erstreckung
- c: Breite der Vorrichtung
- 1: vertikale Schlauchbeutelmaschine
- 2: Folienbahn
- 3: Abzug
- 4: Vorratsrolle
- 5: Umlenkkante
- 6: Folienschlauch
- 7: Vorrichtung
- 8: Beutel
- 9: Längssiegeleinrichtung
- 10: Rand
- 11: Längsnaht
- 12: Formschulter
- 13: Quersiegeleinrichtung
- 14: Quersiegelbacke
- 15: Transportrichtung
- 16: Trenneinrichtung
- 17: vertikale Richtung
- 18: äußere Oberfläche
- 19: Schlauchführung
- 20: Befüllquerschnitt
- 21: Einrichtung zum Verstellen
- 22: Blech
- 23: Bohrung
- 24: Schraube
- 25: Quernaht
- 26: Wand
- 27: Verbindungsstück
- 28: Bogen
- 29: Spitze
- 30: Spalt
- 31: Schweißverbindung
- 32: Teleskopverbindung
- 33: Teleskoparretierung
- 34: tragende Fläche
- 35, 36: Teilfläche
- 37: Verstelleinrichtung
- 38, 39, 40: Abschnitt
- 41: Motor
- 42, 43: Füllrohr
- 44: Längssiegelbacke

## Patentansprüche

1. Vorrichtung (7) zum Aufnehmen eines aus einer Folienbahn (2) erzeugten Folienschlauches (6), welcher durch die Vorrichtung (7) zu Verpackungszwecken befüllt werden kann, wobei sich die Vorrichtung (7) in vertikaler Richtung (17) im Inneren des Folienschlauches (6) erstreckt, und die äußere Oberfläche (18) der Vorrichtung (7) für ein Entlanggleiten des Folienschlauches (6) ausgelegt ist, **dadurch gekennzeichnet, dass** die Vorrichtung (7) zwei separate, parallel zueinander und in vertikaler Richtung (17) ausgerichtete Schlauchführungen (19) aufweist, dass die Schlauchführungen (19) einen Befüllquerschnitt (20) des Folienschlauches (6) begrenzen, und dass an der Vorrichtung (7) eine Einrichtung (21) zum Verstellen des Abstandes (a) zwischen den Schlauchführungen (19) vorgesehen ist, um damit den Befüllquerschnitt (20) zu verändern.

2. Vorrichtung nach Anspruch 1, **dadurch gekennzeichnet, dass** die Schlauchführungen (19) rinnenförmig ausgestaltet sind.

3. Vorrichtung nach Anspruch 2, **dadurch gekennzeichnet, dass** der horizontale Querschnitt einer Schlauchführung (19) einem Halbkreis oder einer Halbellipse entspricht.

4. Vorrichtung nach Anspruch 2, **dadurch gekennzeichnet, dass** eine Schlauchführung (19) zwei parallel zueinander verlaufende Wände (26) aufweist, welche über ein Verbindungsstück (27) miteinander verbunden sind.

5. Vorrichtung nach Anspruch 4, **dadurch gekennzeichnet, dass** das Verbindungsstück (27) im horizontalen Querschnitt einen nach außen gerichteten Bogen (28) oder eine nach außen weisende Spitze (29) aufweist.

6. Vorrichtung nach einem der Ansprüche 1 bis 5, **dadurch gekennzeichnet, dass** die Einrichtung (21) im Inneren der Vorrichtung (7), vorzugsweise an dem Spalt (30), der den Abstand (a) der Schlauchführungen (19) beschreibt, vorgesehen ist.

7. Vorrichtung nach Anspruch 6, **dadurch gekennzeichnet, dass** die Einrichtung (21) eine Steckverbindung oder eine Klemmverbindung aufweist.

8. Vorrichtung nach Anspruch 6, **dadurch gekennzeichnet, dass** die Einrichtung (21) eine Teleskopverbindung (32) mit einer Teleskoparretierung (33) aufweist.

9. Vertikale Schlauchbeutelmaschine (1) mit einer Vorrichtung (7) gemäß einem der Ansprüche 1 bis 8, wobei eine Folienbahn (2) mittels eines Abzugs (3) von einer Vorratsrolle (4) abgewickelt und mittels einer Umlenkkante (5) zu einem Folienschlauch (6) umgeformt wird, wobei der Folienschlauch (6) vertikal ausgerichtet ist und die Vorrichtung (7) umschließt, eine Längssiegeleinrichtung (9) zum Verschweißen der Ränder (10) der Folienbahn (2) und damit zum Längsverschweißen des Folienschlauches (6) vorgesehen ist, eine Quersiegeleinrichtung (13) mit gegeneinander bewegbaren Quersiegelbacken (14) zum Verschweißen des Folienschlauches (6) quer zu seiner Transportrichtung (15) vorgesehen ist, und mit einer Trenneinrichtung (16) zum Abtrennen eines erzeugten Beutels (8) vom Folienschlauch (6).

10. Schlauchbeutelmaschine nach Anspruch 9, **dadurch gekennzeichnet, dass** mit der Umlenkkante (5) eine tragende Fläche (34) verbunden ist, wobei diese Fläche (34) zum Tragen der einlaufenden Folienbahn (2) vorgesehen ist, so dass die Folienbahn (2) in stetiger Weise über die Fläche (34) auf die Umlenkkante (5) zu läuft, dass die Fläche (34) aus zwei Teilflächen (35, 36) besteht, welche mittels einer Verstelleinrichtung (37) aufeinander zu bzw. voneinander weg gestellt werden können, und dass jede Teilfläche (35, 36) einen Abschnitt (38) oder mehrere Abschnitte (39, 40) der Umlenkkante (5) aufweist.

11. Schlauchbeutelmaschine nach Anspruch 9 oder Anspruch 10, **dadurch gekennzeichnet, dass** die Einrichtung (21) im Bereich der Umlenkkante (5) angeordnet ist.

12. Schlauchbeutelmaschine nach Anspruch 11, **dadurch gekennzeichnet, dass** eine erste ortsfeste Schlauchführung (19) als Widerstand für den Abzug (3) vorgesehen ist, und dass die zweite Schlauchführung (19) relativ zur ersten Schlauchführung (19) verstellbar ist.

13. Schlauchbeutelmaschine nach Anspruch 9, **dadurch gekennzeichnet, dass** die Einrichtung (21) einen Motor (41) zum Verstellen des Abstandes (a) zwischen den Schlauchführungen (19) aufweist.

14. Schlauchbeutelmaschine nach Anspruch 9 oder Anspruch 13, **dadurch gekennzeichnet, dass** die Einrichtung (21) zum Parallelversetzen einer Schlauchführung (19) mitsamt der an dieser Schlauchführung (19) vorgesehenen Längssiegeleinrichtung (9) ausgelegt ist.

15. Schlauchbeutelmaschine nach Anspruch 9 oder Anspruch 13, **dadurch gekennzeichnet, dass** eine Schlauchführung (19) und die an dieser Schlauchführung (19) vorhandene Längssiegeleinrichtung (9) ortsfest sind, und dass die andere, an der Umlenkkante (5) vorgesehene Schlauchführung (19), vorzugsweise mitsamt der Umlenkkante (5) mittels der Einrichtung (21) versetzbar sind.

16. Schlauchbeutelmaschine nach einem der Ansprüche 9 bis 15, **dadurch gekennzeichnet, dass** zwischen den beiden Schlauchführungen (19) zwei parallel zueinander ausgerichtete Füllrohre (42, 43) vorgesehen sind.
